# EUROPÄISCHE PATENTSCHRIFT

(11) **EP 2 295 871 B1**
(45) Veröffentlichungstag und Bekanntmachung des Hinweises auf die Patenterteilung: **27.01.2021**
(21) Anmeldenummer: 10008797.2
(22) Anmeldetag: 24.08.2010
(51) Int. Cl.: F24D 3/16, F24F 5/00

(54) **Deckenheiz- und/oder Kühleinheit**
Ceiling heating and/or cooling unit
Unité plafonnière de chauffage et/ou de refroidissement

(30) Priorität: 31.08.2009 DE 202009011784 U
(43) Veröffentlichungstag der Anmeldung: 16.03.2011
(73) Patentinhaber: Zehnder Group International AG, 5722 Gränichen (CH)
(72) Erfinder: Weschle, Hans-Peter, 77743 Neuried (DE)
(74) Vertreter: Rentsch Partner AG

(56) Entgegenhaltungen:
- EP-A1- 0 769 659
- EP-A1- 0 859 097
- EP-A2- 1 344 987
- DE-A1- 19 720 863
- DE-C- 724 399
- DE-U1-202009 001 750
- GB-A- 390 047
- US-A- 2 628 078
- US-A1- 2008 264 602

## Beschreibung

Die Erfindung betrifft eine Deckenheiz- und/oder Kühleinheit nach dem Oberbegriff von Anspruch 1.Deckenheiz- und/oder Kühleinheiten der vorgenannten, das heißt gattungsgemäßen Art sind aus dem Stand der Technik an sich bekannt, weshalb es an dieser Stelle eines gesonderten druckschriftlichen Nachweises nicht bedarf.

Vorbekannte Deckenheiz- und/oder Kühleinheiten dienen dem Heizen und/oder dem Kühlen von Gebäuderäumen oder Teilen hiervon. Sie sind raumdeckenseitig installiert und verfügen über eine Deckenheiz- und/oder Kühleinrichtung, die ihrerseits eine von einem Heiz- und/oder Kühlmedium durchströmbare Rohrleitung aufweist. Die Deckenheiz- und/oder Kühleinrichtung ist von einer zumeist aus Stahlblech gebildeten Kassette aufgenommen, die im endmontierten Zustand mit ihrer raumseitigen Abschlussfläche im Wesentlichen bündig mit der Raumdecke abschließt. Als Zwischendecke ist die Decke zumeist aus Deckenteilen gebildet, die ihrerseits aus Gipskarton bestehen.

Die Deckenheiz- und/oder Kühleinheiten der vorgenannten Art haben sich im alltäglichen Praxiseinsatz bewährt. Sie können insbesondere während der kalten Jahreszeit als Deckenheizeinheiten genutzt werden, wobei in diesem Fall ein entsprechend temperiertes Heizmedium durch die von der Deckenheiz- und/oder Kühleinrichtung bereitgestellte Rohrleitung geführt wird. An heißen Tagen, beispielsweise im Sommer, kann die Deckenheiz- und/oder Kühleinheit als reine Kühleinheit genutzt werden, wobei in diesem Fall durch die Rohrleitung der Deckenheiz- und/oder Kühleinrichtung ein entsprechend kühler als die Raumluft temperiertes Kühlmedium geführt wird.

Die geometrischen Abmessungen vorbekannter Deckenheiz- und/oder Kühleinheiten sind bevorzugterweise standardisiert und auf die Rastergröße eingesetzter Deckenelemente abgestimmt. Dies erlaubt eine vergleichsweise einfach durchzuführende Installation, da Deckenheiz- und/oder Kühleinheiten ohne besondere Anpassungsarbeiten gegen Deckenelemente ausgetauscht werden können.

Deckenheiz- und/oder Kühleinheiten sind im Übrigen aus folgenden Veröffentlichungen bekannt.

Die DE 724 399 offenbart einen in Hohlräumen einer Decke frei aufgehängten Strahlungsheizkörper. Dabei ist der Strahlungsheizkörper mittels Flacheisen an zwei Deckenträgern angeschraubt. Der Strahlungsheizkörper liegt frei in einem Raum, der einen als Strahlplatte wirkenden Boden sowie eine aus wärmedämmendem Stoff bestehende, in halber Höhe des Deckenquerschnittes liegende Deckplatte und Seitenwände aufweist. Erfindungsgemäß ist in der Deckplatte ein um seine Mittelachse abklappbares Teilstück vorgesehen. Dieses kann wahlweise verschwenkt werden, wobei im geöffneten Zustand die Wärme nach oben und im geschlossenen Zustand die Wärme nach unten strömt.

Aus der EP 1 344 978 A2 ist ein Flächenheiz- und Kühlelement bekannt, das aus einzelnen Gipsplatten und mäanderförmigen Kapillarrohrmatten und einer Dämmung besteht. Es sind dabei einzelne Deckenelemente in einem Verbund einer Thermoplatte mit rückseitig aufgesetzten Abstandshaltern und Arretierungsklötzen vorgesehen. Zwischen den Abstandshaltern sind die Kapillarrohrmatten mit abdeckender Dämmung angeordnet, wobei die Dämmung mit einer Feuerschutzplatte oder einer PE-Folie abgedeckt ist. Die Abstandshalter sind auf die Thermoplatte im Randbereich aufgeklebt.

Aus der US 2008/0264602 A1 sind Strahlungsheizungs- und Kühlplatten bekannt. Diese sind mittels Schrauben an einem Träger einer Deckenwand installiert. Dabei weisen die Platten eine erste Krempe und eine sich daran anschließende zweite Krempe auf, wobei die Verschraubung an der zweiten Krempe ausgebildet ist.

Aus der EP 0 859 097 A1 ist ein Deckenelement mit einem Rahmen bekannt, das ein Rohr zur Führung eines Wärmetransportmittels aufweist. Dabei weist das Deckenelement Mittel zur Verteilung von Wärme auf, die als Honigwabenstruktur ausgestaltet sind.

Die US 2,628,078 A betrifft eine Heizstrahlplatte mit einem Metallblech, welches eine Vielzahl von Kanälen ausbildet. Die Kanäle umfassen eine Kante und einen daran sich anschließenden Flansch, wobei die Kanäle mittels Bolzen an den Flanschen befestigt sind. Die Kanäle dienen dazu, Warmwasserrohre aufnehmen zu können.

Aus der GB 390,047 A ist ein elektrisches Heizelement bekannt. Dieses verfügt über einen elektrischen Widerstandsdraht, der schlaufenartig auf einer vorzugsweise emaillierten Trägerplatte angebracht ist. Die Trägerplatte kann von einem Rahmen umgeben sein, der einstückig mit der Platte ausgebildet und an einer Wand befestigt sein kann. Das Dokument zeigt weiterhin eine Deckenheizeinheit gemäß dem Oberbegriff von Anspruch 1.

Obgleich sich aus dem Stand der Technik vorbekannte Deckenheiz- und/oder Kühleinheiten im alltäglichen Praxiseinsatz bewährt haben, besteht Verbesserungsbedarf, insbesondere mit Blick auf eine vereinfachte Montage. Es ist deshalb die **Aufgabe** der Erfindung, eine Deckenheiz- und/oder Kühleinheit der vorgenannten Art dahingehend weiterzuentwickeln, dass eine vereinfachte Installation derselben ermöglicht ist.

Zur **Lösung** dieser Aufgabe wird mit der Erfindung eine Deckenheiz- und/oder Kühleinheit der vorgenannten Art vorgeschlagen, die sich dadurch auszeichnet durch die Merkmale nach dem kennzeichnenden Teil von Anspruch 1. Die die Deckenheiz- und/oder Kühleinrichtung aufnehmende Kassette der Deckenheiz- und/oder Kühleinheit ist nach Art einer Wanne ausgebildet. Nach einem Einbringen der Deckenheiz- und/oder Kühleinrichtung in die Kassette kann die so gebildete Deckenheiz- und/oder Kühleinheit als Baukomponente gehandhabt und bestimmungsgemäß in eine dafür vorgesehene Ausnehmung einer Decke eingesetzt werden. Bei Deckenheiz- und/oder Kühleinheiten nach dem Stand der Technik kommen zur deckenseitigen Kassettenanordnung Montagewinkel zum Einsatz. Diese sind sowohl deckenseitig als auch kassettenseitig zu verschrauben. Je nach Größe der Deckenheiz- und/oder Kühleinheit kommen eine Vielzahl derartiger Montagehilfen zum Einsatz, wobei für eine ordnungsgemäße Deckenanordnung wenigstens vier Montagehilfen vorzusehen sind.

Die vorbekannte Konstruktion erweist sich als montageunfreundlich. Zum einen dauert eine Montage vergleichsweise lang. Zum anderen ist eine deckenplane Ausrichtung schwierig, da durch die zum Einsatz kommenden Montagehilfe bedingte Lagetoleranzen ausgeglichen werden müssen.

Die erfindungsgemäße Ausgestaltung schafft hier Abhilfe. Sie ermöglicht eine in einfacher Weise durchzuführende Montage, die weniger zeitaufwendig ist und darüber hinaus eine bestimmungsgemäße Ausrichtung zur Decke sicherstellt.

Die Kassette nach der erfindungsgemäßen Ausgestaltung verfügt über einen umlaufenden Montagerand. Dieser kann vollumlaufend ausgebildet sein. Er ist einstückig mit der Kassette ausgebildet, so dass Vormontagearbeiten komplett entfallen können, und zwar im Unterschied zum vorbekannten Stand der Technik, demgemäß Montagehilfen wie zum Beispiel Montagewinkel zum Einsatz kommen, die der Vormontage bedürfen.

Die einstückige Ausgestaltung von Kassette einerseits und Montagerand andererseits hat zudem den Vorteil, dass ein zur raumseitigen Abschlussfläche der Kassette exakt ausgerichteter Montagerand herstellerseitig vorgegeben werden kann, was die Montage am Einbauort insofern erleichtert, als dass ungewollte Relativstellungen von Kassette einerseits und Decke andererseits aufgrund von zwischengeordneten Montagehilfen vollständig vermieden werden.

Es ist erfindungsgemäß vorgesehen, die Kassette samt einstückig daran angeordnetem Montagerand aus einer Blechtafel, vorzugsweise einer Stahlblechtafel zu bilden. Die Stahlblechtafel wird randseitig umgeformt, beispielsweise kalt umgeformt durch Stanzen und anschließendes Biegen. So kann beispielsweise vorgesehen sein, in einem ersten Schritt zur Ausgestaltung des Montagerandes nicht benötigte Bereiche des Stahlbleches durch Stanzen zu entfernen. Das so erhaltene Zwischenprodukt wird dann randseitig zur Bildung des Montagerandes mehrfach umgebogen. Es ist in diesem Zusammenhang vorgesehen, das Stahlblech im Bereich des Montagerandes doppellagig zu führen. Dies erbringt zum einen den Vorteil einer vereinfachten Herstellung durch nur ein einmaliges Umbiegen, zum anderen wird durch die Doppellagigkeit eine hinreichende Biege- und Torsionssteifigkeit des Montagerandes sichergestellt, so dass im endfertig montierten Zustand der Deckenheiz- und/oder Kühleinheit eine sichere Anordnung an der zugehörigen Decke gewährleistet ist.

Zur bestimmungsgemäßen Anordnung der Deckenheiz- und/oder Kühleinheit an einer Decke kommt erfindungsgemäß eine Kontereinheit zum Einsatz, die rahmenförmig ausgebildet sein kann und aus Holz, Metall und/oder Kunststoff besteht. Im endmontierten Zustand befindet sich die Kontereinheit auf der raumabgewandten Seite der Decke, wohingegen der Montagerand raumseitig an der raumseitigen Oberfläche der Decke zu liegen kommt. In der Konsequenz ergibt sich, dass im endfertig montierten Zustand die in der Decke vorgesehene Ausnehmung zur Aufnahme der Deckenheiz- und/oder Kühleinheit randseitig zwischen der Kontereinheit der Deckenheiz- und/oder Kühleinheit einerseits und dem Montagerand der Deckenheiz- und/oder Kühleinheit andererseits eingeklemmt ist.

Als Verbindungselement zwischen Kontereinheit und Montagerand dienen Schrauben, insbesondere selbstschneidende Schrauben, was die Durchführung von Montagearbeiten vereinfacht. Gemäß einer bevorzugten Ausführungsform sind die Schrauben kassettenseitig der Deckenheiz- und/oder Kühleinheit durch Durchgangsbohrungen hindurchgeführt, welche Durchgangsbohrungen als Langlöcher ausgebildet sind. Lagetoleranzen können so ausgeglichen werden, insbesondere solche, die im bestimmungsgemäßen Verwendungsfall durch thermischen Verzug auftreten.

Gemäß einem weiteren Merkmal einer Weiterbildung, die nicht unter den Schutzbereich der Ansprüche fällt, ist vorgesehen, dass der Montagerand eine Verblendung trägt. Die Verblendung dient insbesondere dazu, die zur Verbindung der Kassette der Deckenheiz- und/oder Kühleinheit mit der Decke vorgesehenen Befestigungsmittel raumseitig abzudecken. Im Ergebnis sind die Befestigungsmittel raumseitig uneinsehbar. Als Befestigungsmittel kommt vorzugsweise eine Schraube zum Einsatz. In diesem Fall wird mittels der Verblendung der raumseitig ansonsten sichtbare Schraubenkopf abgedeckt. Im endmontierten Zustand befindet sich der Schraubenkopf in Blickrichtung auf die Deckenheiz- und/oder Kühleinheit unterhalb der Verblendung.

Gemäß einer bevorzugten Ausgestaltungsform ist die Verblendung einstückig mit dem Montagerand ausgebildet. Im Ergebnis dieser bevorzugten Ausführungsform ergibt sich eine Kassette mit einem einstückig daran ausgebildeten Montagerand, der wiederum einstückig damit ausgebildet eine Verblendung trägt. Die Kassette, der Montagerand und die Verblendung ergeben gemäß dieser bevorzugten Ausführungsform also ein Bauteil, sind also integrativ ausgebildet.

Die Verblendung kann als Abkantung ausgebildet sein und über einen parallel zum Montagerand verlaufenden Abschnitt verfügen. Gemäß dieser Ausführungsform ist das Blechmaterial der Kassette randseitig umgebogen, welche Umbiegung den Montagerand darstellt. Ausgehend vom Montagerand ist eine weitere Umbiegung in Form einer Abkantung vorgesehen, die die Verblendung darstellt. Dabei ist die Verblendung vorzugsweise aus zwei Abschnitten gebildet, nämlich einem ersten Abschnitt und einem zweiten Abschnitt, wobei sich der erste Abschnitt an den Montagerand und der zweite Abschnitt an den ersten Abschnitt anschließt. Dabei ist der erste Abschnitt vorzugsweise 90 Grad zum Montagerand ausgerichtet und der zweite Abschnitt ebenfalls um 90 Grad ausgerichtet, und zwar gegenüber dem ersten Abschnitt. Im Ergebnis ergibt sich, dass der Montagerand und der zweite Abschnitt parallel zueinander verlaufen.

Die Deckenheiz- und/oder Kühleinrichtung der Deckenheiz- und/oder Kühleinheit verfügt über eine Rohrleitung, die mäander- oder schleifenförmig verlegt ist. Die Rohrleitung dient der Führung eines Wärme- und/oder Kühlmediums. Es ist bevorzugterweise vorgesehen, die Rohrleitung in ein Wärmeleitelement einzubetten, das bevorzugterweise plattenförmig ausgebildet ist und aus expandiertem Graphit besteht.

Weitere Vorteile der Erfindung ergeben sich aus der nachfolgenden Beschreibung anhand der Fign. Dabei zeigen
- Fig. 1: in schematisch perspektivischer Explosionsdarstellung eine erfindungsgemäße Deckenheiz- und/oder Kühleinheit;
- Fig. 2: in einer schematischen Perspektivdarstellung die Deckenheiz- und/oder Kühleinheit nach Fig. 1;
- Fig. 3: in einer schematischen Perspektivdarstellung die Deckenheiz- und/oder Kühleinheit nach Fig. 1;
- Fig. 4: in einer schematisch perspektivischen Ausschnittsdarstellung die Deckenheiz- und/oder Kühleinheit nach Fig. 1;
- Fig. 5: in einer schematischen Seitenansicht ausschnittsweise die Deckenheiz- und/oder Kühleinheit nach Fig. 1;
- Fig. 6: in einer schematisch perspektivischen Darstellung von unten die Deckenheiz- und/oder Kühleinheit nach Fig. 1;
- Fig. 7: in einer schematischen Perspektivdarstellung die Kassette der Deckenheiz- und/oder Kühleinheit gemäß einer zweiten Ausführungsform und
- Fig. 8: in schematischer Seitendarstellung die Ausführungsform nach Figur 7.

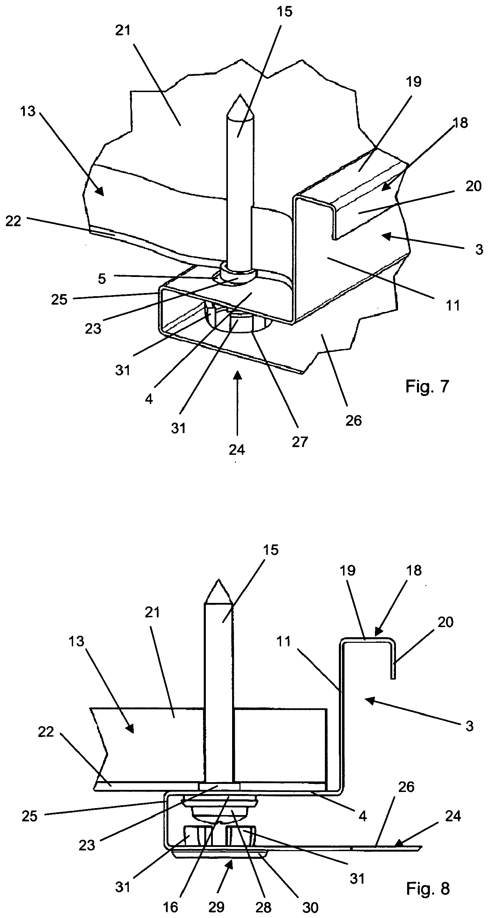

Die in den Figuren 7 und 8 gezeigten Ausführungsbeispiele fallen nicht unter den Schutzbereich der Ansprüche.

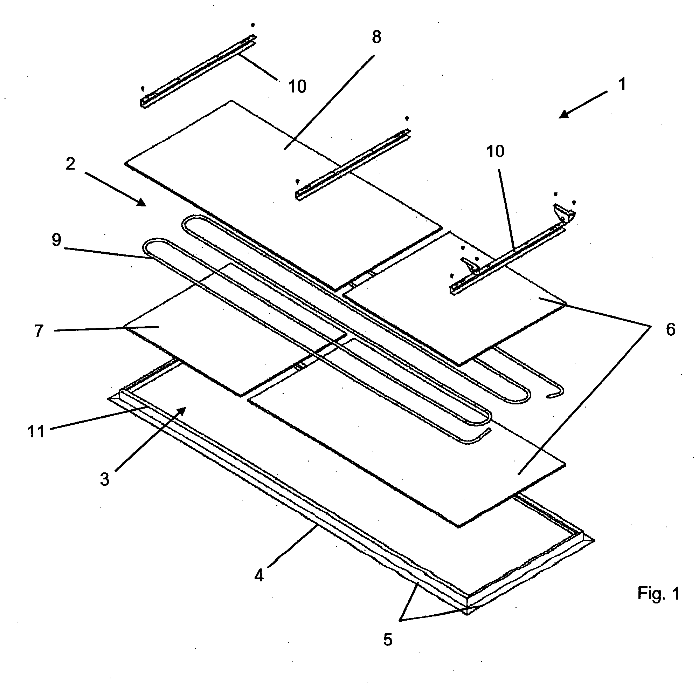

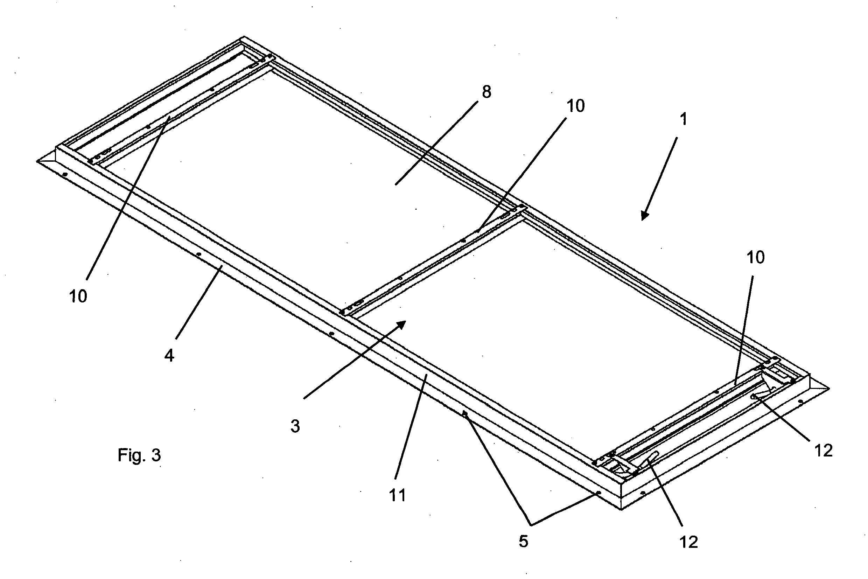

Fig. 1 lässt die erfindungsgemäße Deckenheiz- und/oder Kühleinheit 1 in einer schematisch perspektivischen Explosionsdarstellung erkennen. Die Deckenheiz- und/oder Kühleinheit 1 weist eine Deckenheiz- und/oder Kühleinrichtung 2 sowie eine Kassette 3 auf, wobei die Deckenheiz- und/oder Kühleinrichtung 2 im endmontierten Zustand von der Kassette 3 aufgenommen ist, wie insbesondere die Darstellung nach Fig. 3 erkennen lässt.

Die Deckenheiz- und/oder Kühleinrichtung 2 verfügt ihrerseits über eine Rohrleitung 9, durch die im bestimmungsgemäßen Verwendungsfall beispielsweise Wasser als Wärme- und/oder Kühlmedium geführt ist.

Die Rohrleitung 9 ist in ein Wärmeelement 6 eingebettet, welches beispielsweise aus expandiertem Graphit bestehen kann Das gezeigte Ausführungsbeispiel nach Fig. 1 zeigt eine Ausgestaltung, dergemäß das Wärmeelement 6 plattenförmig ausgebildet ist und über eine mit Bezug auf die Zeichnungsebene nach Fig. 1 untere Platte 7 und eine obere Platte 8 verfügt. Die Platten 7 bzw. 8 können in ihrer geometrischen Abmessung standardisiert ausgebildet sein, weshalb sowohl die untere Platte 7 als auch die obere Platte 8 aus einzelnen Teilabschnitten bestehen kann.

Die Kassette 3 ist aus Stahlblech gebildet. Sie verfügt über einen umlaufenden Montagerand 4, wobei erfindungsgemäß vorgesehen ist, die Kassette 3 und den Montagerand 4 einstückig auszugestalten, das heißt den Montagerand 4 als integralen Bestandteil der Kassette 3 zu bilden. Der Montagerand 4 verfügt über eine Mehrzahl von Durchgangsbohrungen 5, die der Hindurchführung von Schrauben zwecks deckenseitiger Befestigung der Kassette 3 dienen.

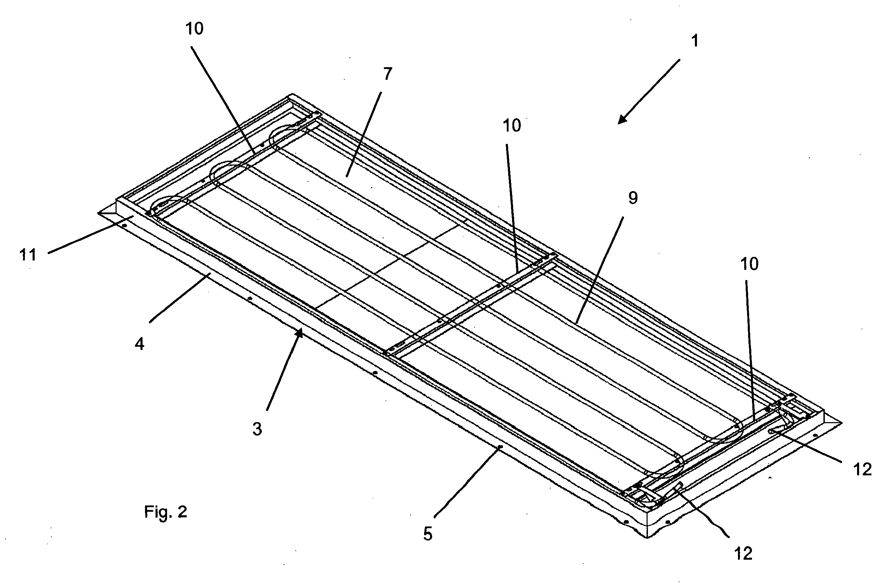

Die Kassette 3 stellt ferner einen Kassettenrand 11 zur Verfügung. Es entsteht auf diese Weise eine Art wannenartige Ausgestaltung der Kassette 3, wobei der von der Kassette 3 bereitgestellte Volumenraum der Aufnahme der Deckenheiz- und/oder Kühleinrichtung 2 dient, wie insbesondere die Darstellungen nach den Fign. 2 und 3 erkennen lassen.

Die Fign. 2 und 3 zeigen die erfindungsgemäße Deckenheiz- und/oder Kühleinheit 1, wobei die Deckenheiz- und/oder Kühleinrichtung 2 der Deckenheiz- und/oder Kühleinheit 1 von der Kassette 3 aufgenommen ist. Im endmontierten Zustand dienen Verstärkungsstreben 10 einer zusätzlichen Stabilisierung, wobei die Streben 10 endseitig mit dem Kassettenrand 11 verbunden, vorzugsweise verschraubt sind. Für den Anschluss der Rohrleitung 9 an einen Wärme- und/oder Kühlmediumkreislauf dienen Anschlussstücke 12. Die Darstellungen nach den Fign. 2 und 3 unterscheiden sich dadurch, dass in Fig. 2 die die Rohrleitung 9 oberseitig abdeckende Platte 8 nicht dargestellt ist.

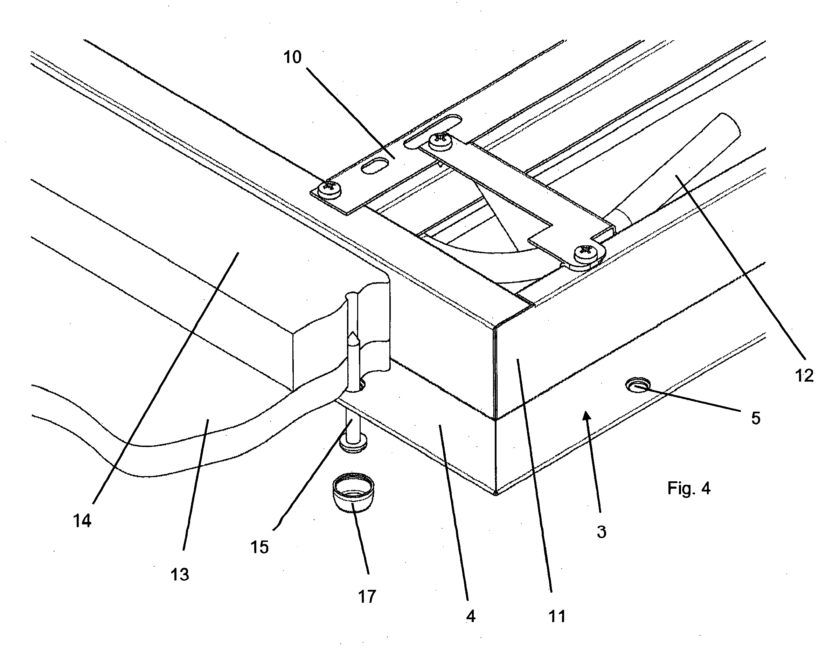

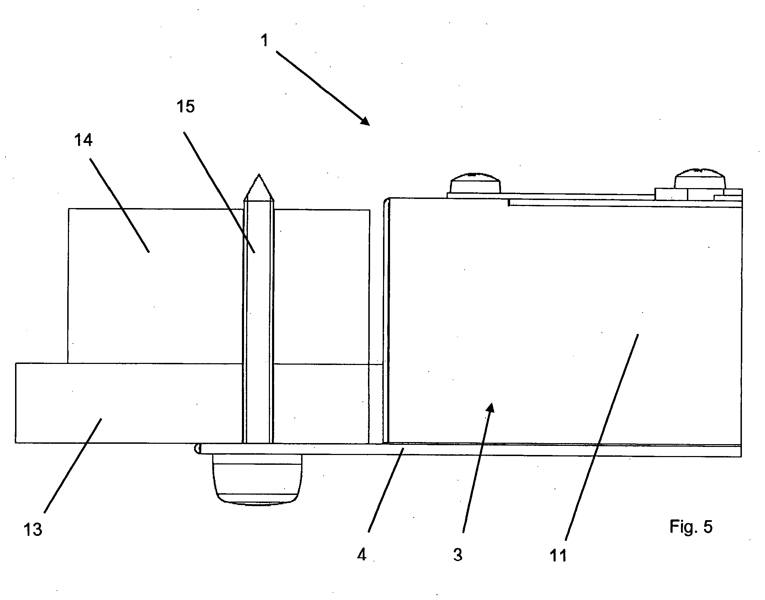

Die Kassette 3 ist aus einer Blechtafel gebildet. Zwecks Ausgestaltung der Kassette 3 wird die Blechtafel verformt, beispielsweise kaltverformt durch Stanzen und nachfolgendes Umbiegen. Wie insbesondere die Darstellung nach den Fign. 4 und 5 erkennen lässt, ist der Montagerand 4 doppellagig ausgestaltet. Dies geschieht in einfacher Weise dadurch, dass die Blechtafel randbereichsseitig um 180° umgebogen und zur Ausgestaltung des Kassettenrands 11 in entgegengesetzter Richtung um 90° zurückgebogen wird. In der Konsequenz entsteht die in den Fign. dargestellte Ausgestaltungsform, wobei der Montagerand 4 doppellagig ausgebildet ist.

Dank des erfindungsgemäßen Montagerandes kann auf Montagehilfen zwecks Anordnung der Deckenheiz- und/oder Kühleinheit 1 an einer Decke vollends verzichtet werden. Den Fign. 4, 5 und 6 kann ausschnittsweise eine endmontierte Anordnung einer erfindungsgemäßen Deckenheiz- und/oder Kühleinheit 1 an einer aus Deckenplatten 13 gebildeten Decke entnommen werden.

Zwecks einer deckenseitigen Anordnung ist in der Decke eine Ausnehmung zur Aufnahme der erfindungsgemäßen Deckenheiz- und/oder Kühleinheit 1 vorgesehen. In dieser Ausnehmung ist die Deckenheiz- und/oder Kühleinheit 1 wie aus den Fign. 4 bis 6 ersichtlich einzuführen. Der Montagerand 4 liegt dann mit seiner deckenzugewandten Seite an der der Raum zugewandten Oberfläche der Deckenplatten 13 an. Durch die am Montagerand 4 vorgesehenen Bohrungen 5 sind Schrauben 15, vorzugsweise selbstschneidende Schrauben geführt, die die Deckenplatte 13 durchgreifen und in eine Kontereinheit eingebracht sind, die im gezeigten Ausführungsbeispiel als Konterrahmen 14 ausgebildet ist. Als Material für den Konterrahmen 14 kommt beispielsweise Metall, Holz und/oder Kunststoff in Frage.

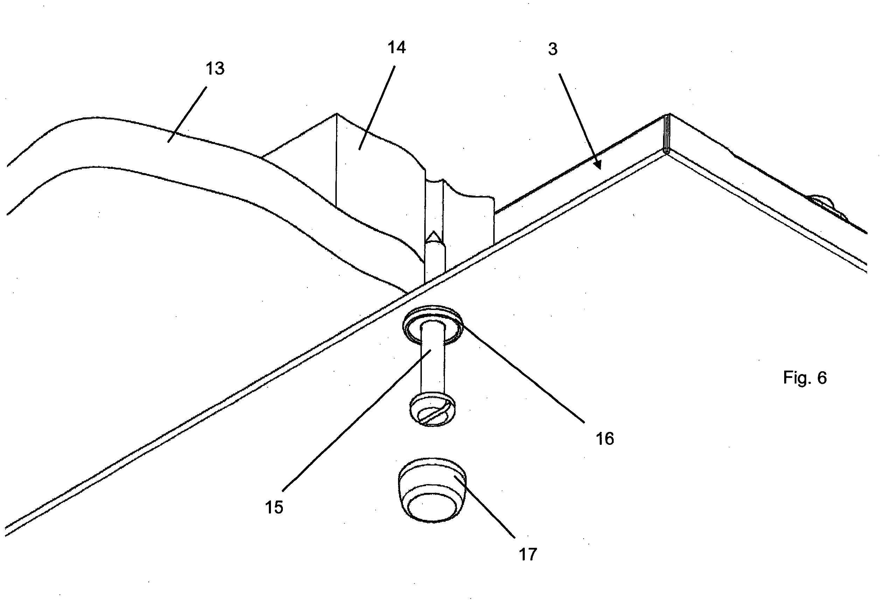

Vorderseitig des Montagerandes 4 können eine Unterlegscheibe 16 und eine Abdeckkappe 17 hinsichtlich einer jeden Schraube 15 vorgesehen sein, wie sich dies insbesondere aus Fig. 6 ergibt.

Wie eine Zusammenschau insbesondere der Fign. 4 und 5 erkennen lässt, ist im endfertig montierten Zustand der Deckenheiz- und/oder Kühleinheit 1 die Deckenplatte 13 randseitig zwischen dem Konterrahmen 14 und dem Montagerahmen 4 eingeklemmt. Auf diese Weise ist ein sicherer Halt der Deckenheiz- und/oder Kühleinheit 1 an der durch die Deckenplatten 13 gebildeten Decke gewährleistet.

Die Figuren 7 und 8 zeigen ausschnittsweise eine alternative Ausgestaltungsform. In den Figuren 7 und 8 ist ausschnittsweise die Kassette 3 der Deckenheiz- und/oder Kühleinheit 1 gezeigt. Die alternative Ausgestaltungsform nach den Figuren 7 und 8 zeichnet sich durch eine Verblendung 24 aus, die vom Montagerand 4 getragen ist. Dabei ist die Verblendung 24 einstückig mit dem Montagerand 4 ausgebildet und besteht aus einer Abkantung, die über einen parallel zur Montagewand verlaufenden Abschnitt 26 verfügt.

Die Kassette 3 besteht aus einem Blechteil 3. In den Figuren 7 und 8 ist ausschnittsweise der Kassettenrand 11 der Kassette 3 zu erkennen. An den Kassettenrand 11 schließt sich einstückig der Montagerand 4 an. Der Montagerand 4 kann beispielsweise durch Abkantungen ausgebildet sein.

An den Montagerand 4 schließt sich gleichfalls einstückig die Verblendung 24 an, die bevorzugter Weise ebenfalls als Abkantung ausgebildet ist. Wie insbesondere die Darstellung nach Figur 8 erkennen lässt, verfügt die Verblendung 24 über einen ersten Abschnitt 25 und einen zweiten Abschnitt 26. Der erste Abschnitt 25 ist orthogonal zum Montagerand 4 und der zweite Abschnitt 26 orthogonal zum ersten Abschnitt 25 ausgebildet. In der Konsequenz verlaufen der Montagerand 4 und der zweite Abschnitt 26 der Verblendung 24 parallel zueinander, wodurch die Schraube 15 bzw. der Schraubenkopf 28 und die Unterlegscheibe 16 raumseitig abgedeckt und damit verblendet sind.

Im gezeigten Ausführungsbeispiel schließt sich an den Kassettenrand 11 mit Bezug auf die Zeichnungsebene nach Figur 8 oberseitig eine weitere Abkantung 18 an, die über einen Steg 19 und einen Steg 20 verfügt. Diese Abkantung 18 dient insbesondere der Stabilisierung der Kassette 3.

Wie die Darstellung nach den Figuren 7 und 8 ferner erkennen lässt, ist die im gezeigten Ausführungsbeispiel dargestellte Deckenplatte 13 aus einer Gipskartonplatte 21 gebildet, die raumseitig eine Putzschicht 22 trägt. Im endmontierten Zustand liegt die Kassette 3 mit ihrem Montagerand 4 randseitig der Deckenplatte 13 an dieser an und ist mit der Deckenplatte 13 verschraubt. Die Ausschnittdarstellung nach den Figuren 7 und 8 lässt exemplarisch eine Schraube 15 erkennen.

Die Schraube 15 ist durch eine Bohrung 25 im Montagerand 4 geführt. Die Bohrung 5 ist bevorzugter Weise als Langloch ausgebildet, um Lagetoleranzen ausgleichen zu können, insbesondere solche, die bei einem bestimmungsgemäßen Betrieb der Deckenheiz- und/oder Kühleinheit durch thermischen Verzug auftreten können. Um insbesondere Beschädigungen der Putzschicht 22 vermeiden zu können, ist eine Hülse 23 vorgesehen, durch die die Schraube 15 raumentfernt geführt ist.

Zum Zwecke der Montage bzw. Demontage der Schraube 15 ist im zweiten Abschnitt 26 der Verblendung 24 eine Montageöffnung in Form einer Bohrung 27 vorgesehen. Durch diese Bohrung 27 ist der Schraubenkopf 28 der Schraube 15 erreichbar. Im endmontierten Zustand ist die Bohrung 27 durch eine Abdeckkappe 29 verschlossen, die ihrerseits aus einem Grundkörper 30 und Rastbeinen 31 gebildet ist.

### Bezugszeichenliste

- 1: Deckenheiz- und/oder Kühleinheit
- 2: Deckenheiz- und/oder Kühleinrichtung
- 3: Kassette
- 4: Montagerand
- 5: Bohrung
- 6: Wärmeelement
- 7: untere Platte
- 8: obere Platte
- 9: Rohrleitung
- 10: Strebe
- 11: Kassettenrand
- 12: Anschlussstück
- 13: Deckenplatte
- 14: Konterrahmen
- 15: Schraube
- 16: Unterlegscheibe
- 17: Kappe
- 18: Abkantung
- 19: Steg
- 20: Steg
- 21: Gipskartonplatte
- 22: Putz
- 23: Hülse
- 24: Verblendung
- 25: erster Abschnitt
- 26: zweiter Abschnitt
- 27: Bohrung
- 28: Schraubenkopf
- 29: Abdeckkappe
- 30: Grundkörper
- 31: Rastbein

## Patentansprüche

1. Deckenheiz- und/oder Kühleinheit zum Einbau in eine Decke mit Deckenplatten (13) aus insbesondere Gipskarton, mit einer Deckenheiz- und/oder Kühleinrichtung (2) und einer die Deckenheiz- und/oder Kühleinrichtung (2) aufnehmenden Kassette (3), wobei die Kassette (3) einen Kassettenrand (11) zur Verfügung stellt, womit eine wannenartige Ausgestaltung der Kassette (3) gegeben ist, und wobei der von der Kassette (3) bereitgestellte Volumenraum der Aufnahme der Deckenheiz- und/oder Kühleinrichtung (2) dient, wobei die Kassette (3) einen zumindest teilweise umlaufenden Montagerand (4) aufweist, wobei die Kassette (3) und der Montagerand (4) einstückig ausgebildet sind, und die Kassette (3) aus einer Stahlblechtafel gebildet ist, **dadurch gekennzeichnet, dass** der Montagerand (4) durch randseitiges Umformen der Stahlblechtafel ausgebildet ist, wobei der Montagerand (4) doppellagig ausgestaltet ist, indem die Stahlblechtafel randbereichsseitig um 180° umgebogen und zur Ausgestaltung des Kassettenrands (11) in entgegengesetzter Richtung um 90° zurückgebogen ist, wobei der Montagerand (4) mit einer Kontereinheit zusammenwirkt, wobei als Verbindungsmittel zwischen dem Montagerand (4) und der Kontereinheit Schrauben (15) dienen, wobei im endfertig montierten Zustand eine Deckenplatte (13) randseitig zwischen der Kontereinheit und dem Montagerand (4) eingeklemmt ist, wobei die Schrauben (15) durch am Montagerand (4) vorgesehene Bohrungen (5) geführt sind, die die Deckenplatte (13) durchgreifen und in die Kontereinheit eingebracht sind.

2. Einheit nach Anspruch 1, **dadurch gekennzeichnet, dass** die Durchgangsbohrungen (5) Langlöcher sind.

3. Einheit nach einem der vorhergehenden Ansprüche, **dadurch gekennzeichnet, dass** die Deckenheiz- und/oder Kühleinrichtung (2) eine von einem Heiz- und/oder Kühlmedium durchströmbare Rohrleitung (9) aufweist.

4. Einheit nach Anspruch 3, **dadurch gekennzeichnet, dass** die Rohrleitung (9) mäander- oder schleifenförmig ausgebildet ist.

5. Einheit nach einem der vorhergehenden Ansprüche, **dadurch gekennzeichnet, dass** die Deckenheiz- und/oder Kühleinrichtung ein vorzugsweise plattenförmig ausgebildetes Wärmeleitelement (6) aufweist.

6. Einheit nach Anspruch 5, **dadurch gekennzeichnet, dass** das Wärmeleitelement (6) aus expandiertem Graphit gebildet ist.

## Claims

1. A ceiling heating and/or cooling unit for being incorporated in a ceiling comprising ceiling panels (13) made of in particular plasterboard, comprising a ceiling heating and/or cooling device (2) and a cassette (3) receiving the ceiling heating and/or cooling device (2), wherein the cassette (3) provides a cassette edge (11), whereby a trough-shaped design of the cassette (3) is obtained, and wherein the volume space provided by the cassette (3) serves to receive the ceiling heating and/or cooling device (2), wherein the cassette (3) comprises an at least partially circumferential mounting rim (4), wherein the cassette (3) and the mounting rim (4) are formed integrally with each other, and the cassette (3) is made of a steel plate, **characterized in that** the mounting rim (4) is formed by transforming the border of the steel plate, wherein the mounting rim (4) is designed with a double layer, **in that** the steel plate has been bent by 180° in the area of the border and has been bent back by 90° in the opposite direction for forming the cassette edge (11), wherein the mounting rim (4) cooperates with a counter-unit, wherein screws (15) serve as connecting means between the mounting rim (4) and the counter-unit, wherein in the finally mounted state the edges of a ceiling panel (13) are clamped between the counter-unit and the mounting rim (4), wherein the screws (15) are guided through bores (5) provided on the mounting rim (4), which bores (5) pass through the ceiling panel (13) and are inserted into the counter-unit.

2. A unit according to claim 1, **characterized in that** the through bores (5) are elongated holes.

3. A unit according to one of the preceding claims, **characterized in that** the ceiling heating and/or cooling device (2) comprises a pipeline (9), through which a heating and/or cooling medium can flow.

4. A unit according to claim 3, **characterized in that** the pipeline (9) is designed in the form of a meander or a loop.

5. A unit according to one of the preceding claims, **characterized in that** the ceiling heating and/or cooling device comprises a preferably plate-shaped heat conducting element (6).

6. A unit according to claim 5, **characterized in that** the heat conducting element (6) is made of expanded graphite.

## Revendications

1. Unité de chauffage et/ou de refroidissement d'un plafond destinée à être installée dans un plafond comprenant des panneaux de plafond (13) fabriqués notamment en plâtre, comprenant un dispositif de chauffage et/ou de refroidissement d'un plafond (2) et une cassette (3) recevant le dispositif de chauffage et/ou de refroidissement d'un plafond (2), la cassette (3) fournissant un rebord de cassette (11), par moyen duquel une configuration en forme de cuve de la cassette (3) est obtenue, et l'espace de volume fourni par la cassette (3) servant à recevoir le dispositif de chauffage et/ou de refroidissement d'un plafond (2), dans lequel la cassette (3) comprend un bord de montage (4) au moins partiellement circonférentiel, la cassette (3) et le bord de montage (4) étant formés d'un seul tenant l'un avec l'autre, et la cassette (3) est formée d'une tôle en acier, **caractérisée en ce que** le bord de montage (4) est formé par déformation des bords de la tôle en acier, le bord de montage (4) comprenant deux couches en raison du fait que les zones de bord de la tôle en acier sont repliées par 180° et sont repliées en arrière par 90° dans la direction opposée pour former le rebord de cassette (11), le bord de montage (4) coopérant avec une contre-unité, dans lequel des vis (15) servent de moyens de liaison entre le bord de montage (4) et la contre-unité, dans lequel les vis (15) sont guidées à travers des trous de forage (5) prévus sur le bord de montage (4), lesquels trous de forage (5) traversent le panneau de plafond (13) et sont insérés dans la contre-unité.

2. Unité selon la revendication 1, **caractérisée en ce que** les trous de passage (5) sont des trous oblongs.

3. Unité selon l'une des revendications précédentes, **caractérisée en ce que** le dispositif de chauffage et/ou de refroidissement d'un plafond (2) comprend une conduite (9), à travers laquelle un liquide de chauffage et/ou de refroidissement peut couler.

4. Unité selon la revendication 3, **caractérisée en ce que** la conduite (9) est configurée en forme d'un méandre ou d'une boucle.

5. Unité selon l'une des revendications précédentes, **caractérisée en ce que** le dispositif de chauffage et/ou de refroidissement d'un plafond (2) comprend un élément conducteur de chaleur (6) de préférence en forme d'une plaque.

6. Unité selon la revendication 5, **caractérisée en ce que** l'élément conducteur de chaleur (6) est fabriqué en graphite expansé.
